(19) Europäisches Patentamt
European Patent Office
Office européen des brevets

(11) Publication number: **0 108 996**
**B1**

(12) # EUROPEAN PATENT SPECIFICATION

(45) Date of publication of patent specification: **10.09.86**

(21) Application number: **83110890.7**

(22) Date of filing: **02.11.83**

(51) Int. Cl.[4]: **C 08 L 67/00,** C 08 L 69/00 // (C08L67/00, 69:00, 51:04, 91:00),(C08L69/00, 67:00, 51:04, 91:00)

(54) **Thermoplastic resinous blend having an improved impact performance.**

(30) Priority: **12.11.82 US 440938**

(43) Date of publication of application:
**23.05.84 Bulletin 84/21**

(45) Publication of the grant of the patent:
**10.09.86 Bulletin 86/37**

(84) Designated Contracting States:
**DE FR GB IT**

(56) References cited:
**FR-A-2 279 810**
**FR-A-2 400 537**
**GB-A-2 077 742**

(73) Proprietor: **MOBAY CORPORATION**
**Penn Lincoln Parkway West**
**Pittsburgh, Pennsylvania 15205 (US)**

(72) Inventor: **Chung, James Y.J.**
**745 Highland Avenue**
**New Martinsville West Virgina 26155 (US)**
Inventor: **Witman, Mark W.**
**Sebastian Kneipp Weg 6**
**D-4150 Krefeld (DE)**

(74) Representative: **Gremm, Joachim, Dr. et al**
**Bayer AG c/o Zentralbereich Patente, Marken und Lizenzen**
**D-5090 Leverkusen 1, Bayerwerk (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 108 996 B1

Courier Press, Leamington Spa, England.

**Description**

FIELD OF THE INVENTION

The present invention relates to a blend of thermoplastic polymer resins and more particularly to a modified blend comprising thermoplastic polyester, polycarbonate and a graft copolymer.

SUMMARY OF THE INVENTION

A thermoplastic blend comprising a $C_1$—$C_4$ (alkylene terephthalate), a polycarbonate resin and an elastomeric based graft copolymer was found to have significantly improved impact properties upon the admixing therewith an additive amount of a modifying oil.

BACKGROUND OF THE INVENTION

Since they were first commercialized, ABS graft polymers have been found useful in a variety of applications. However, for some applications, notably those related to the field of transportation, ABS is often regarded to be deficient in terms of its gasoline resistance.

Blends of ABS and polycarbonate resins were disclosed in U.S. Patents 3,130,177 and 3,852,393 and although found suitable for many end uses, the levels of impact resistance and gasoline resistance presented a drawback for some important markets. Similar blends are disclosed in British Patent 1,253,226 whereas U.S. Patent 3,162,695 is noted for its teaching respecting a blend of polycarbonate and a graft copolymer of methylmethacrylate and styrene monomers polymerized in the presence of a butadiene styrene latex.

Further noted is U.S. 3,864,428 wherein taught are compositions comprising an aromatic polyester, a polycarbonate and a graft copolymer of butadiene. Other art serving in providing the background to the present invention is U.S. 4,096,202 teaching compositions comprising thermoplastic polyesters and impact modifiers based on an acrylate based elastomer, and 4,299,928 wherein taught are compositions comprising polycarbonate and an acrylate based elastomer.

FR—A—2270 810 refers to a composition comprising a graft polymer and a modifying oil. While the reference teaches an improvement in impact strength, there is no indication that the teaching is applicable to other, different polymeric systems.

DETAILED DESCRIPTION OF THE INVENTION

*1. Thermoplastic Polyester Resins (TPE)*

The high molecular weight, thermoplastic polyester resins suitable in the practice of the invention are derived from an aromatic dicarboxylic acid and a diol component and are characterized in that their intrinsic viscosity is at least 0.4 deciliters per gram. Optionally, the aromatic dicarboxylic acid component accounts for at least 85 mole percent of the dicarboxylic acid component. Among the suitable aromatic dicarboxylic acids are terephthalic acid, isophthalic acid, naphthalenedicarboxylic acid, diphenyletherdicarboxylic acid, diphenyldicarboxylic acid, diphenylsulfone dicarboxylic acid and diphenoxyethane dicarboxylic acid. The optional, at most 15 mole percent of the acid component which is not aromatic dicarboxylic, may be represented by hydroxycarboxylic acids and by aliphatic dicarboxylic acids such as succinic acid, adipic acid and sebacic acid.

The diol component of these polyesters may contain from 2 to 10 carbon atoms, preferably from 2 to 4 carbon atoms in the form of linear methylene chains with up to 30 mole percent of one or more other aliphatic diols having 3 to 8 carbon atoms, cycloaliphatic diols having from 6 to 15 carbon atoms or aromatic diols having from 6 to 21 carbon atoms. Examples of such additional diols ("codiols") include 3-methylpentanediol-(2,4), 2-methylpentanediol-(1,4), 2,2,4-trimethylpentane-2,2,4-trimethylpentanediol-(1,3), 2-ethylhexanediol-(1,3), 2,2-diethylpropanediol-(1,3), hexanediol-(1,3), 1,4-di-(β-hydroxyethoxy)benzene, 2,2-bis-(4-hydroxycyclohexyl)-propane, 2,4-dihydroxy-1,1,3,3-tetramethyl-cyclobutane, 2,2-bis-(3-β-hydroxy-ethoxyphenyl)propane and 2,2-bis-(4-hydroxy-propoxyphenyl)-propane.

Typical examples of the diol include polymethylene-α,ω-diols such as ethylene glycol, trimethylene glycol, tetramethylene glycol and hexamethylene glycol, neopentyl glycol, cyclohexane dimethylol, tricyclodecane dimethylol, 2,2-bis(4-β-hydroxyethoxyphenyl)propane, 4,4'-bis-(β-hydroxyethoxy)-diphenylsulfone, and diethylene glycol.

The polyesters may be branched by incorporating trihydric or tetrahydric alcohols or tribasic or tetrabasic acids, as described in German Offenlegungsschrift 1,900,270 and U.S. Patent 3,692,744. Examples of suitable branching agents include trimesic acid, pyromellitic acid, trimethylolpropane and ethane, and pentaerythritol. It is advisable not to use more than 1 mole% of branching agent, based on the quantity of acid component. The polyesters may also contain known monofunctional compounds such as phenol or benzoic acid as chain terminators.

The preferred polyesters are characterized in that their structure comprises units of the general formula (I):

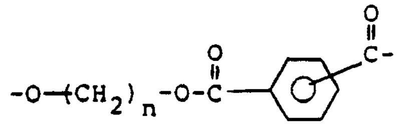

(I)

where n denotes 2 to 4.

The most preferred poly(alkylene terephthalate) in the present context is poly(ethylene terephthalate). The intrinsic viscosity characterizing the suitable polyester resins in the practice according to the invention should preferably be in the range of 0.4 to 1.4 grams per deciliter and, more preferably, between 0.5 and 1.2 grams per deciliter, as measured in a 1% solution of phenol and tetrachloroethane (60:40) at 25°C.

Methods for the preparation of the polyester resin suitable in the present context are known and have been described in U.S. Patents 2,465,319 and 3,047,539.

The composition of the invention may include crystallization rate promoters for the polyester such as to allow lower mold temperatures and shorter injection cycles. Suitable promoters have been taught in U.S. Patent 4,223,113 which disclosure is incorporated herein by reference.

*2. The Polycarbonate Resins*

The polycarbonate resins useful in the practice of the invention are homopolycarbonates, copolycarbonates and terpolycarbonates or mixtures thereof. The polycarbonates generally have molecular weights of 10,000—200,000 (average molecular weight), preferably 20,000—80,000 and may have a melt flow rate per ASTM D—1238 at 300°C of about 1 to about 24 gm/min., preferably about 2—12 gm/10 min. They may be prepared, for example, by the known diphasic interface process from phosgene and bisphenols by polycondensation (see German Offenlegungsschriften 2,063,050; 2,063,052; 1,570,703; 2,211,956; 2,211,957 and 2,248,817; French Patent 1,561,518; and the monograph, H. Schnell, "Chemistry and Physics of Polycarbonates", Interscience Publishers, New York, 1964, all incorporated herein by reference).

In the present context, bisphenols suitable for the preparation of the copolycarbonates of the invention conform to the structural formulae (1) or (2)

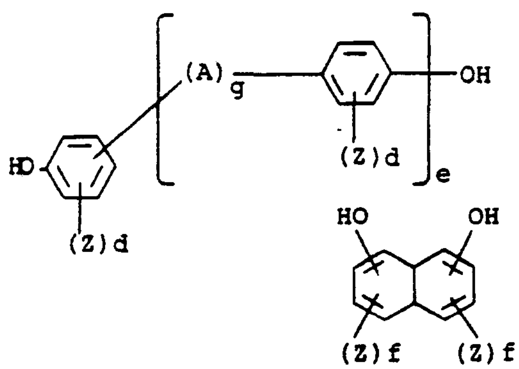

(1)

(2)

wherein

A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, an —SO— or —$SO_2$— radical;

e and g both denote the number 0 or 1;

Z denotes F, Cl, Br or $C_1$—$C_4$-alkyl and if several Z radicals are substituents in one aryl radical, they may be identical or different;

d denotes 0 or an integer of from 1 to 4; and

f denotes 0 or an integer of from 1 to 3.

Among the useful bisphenols in the practice of the invention are hydroquinone, resorcinol, bis-(hydroxyphenyl)alkanes, bis-(hydroxyphenyl)-cycloalkanes, bis-(hydroxyphenyl)-ethers, bis-(hydroxyphenyl)-ketones, bis-(hydroxyphenyl)-sulfoxides, bis-(hydroxyphenyl)-sulfones and α,α-bis-(hydroxyphenyl)-diisopropylbenzenes, as well as their nuclear-alkylated compounds. These and further suitable aromatic dihydroxy compounds are described, for example, in U.S. Patents 3,028,365; 2,999,835; 3,148,172; 3,271,368; 2,991,273; 3,271,367; 3,280,078; 3,014,891 and 2,999,846, all incorporated herein by reference. Further examples of suitable bisphenols are 2,2-bis-(4-hydroxyphenyl)-propane (bisphenol A), 2,4-bis-(4-hydroxyphenyl)-2-methyl-butane, 1,1-bis-(4-hydroxyphenyl)-cyclohexane, α,α-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfoxide, bis-(3,5-dimethyl-4-hydroxyphenyl)-sulfone,

hydroxybenzophenone, 2,4-bis-(3,5-dimethyl-4-hydroxyphenyl)-2-methylbutane, 1,1-bis-(3,5-dimethyl-4-hydroxyphenyl)-cyclohexane, α,α-bis-(3,5-dimethyl-4-hydroxyphenyl)-p-diisopropyl benzene, and 4,4'-sulfonyl diphenol.

Examples of particularly preferred aromatic bisphenols are 2,2-bis-(4-hydroxyphenyl)-propane, 2,2-bis-(3,5-dimethyl-4-hydroxyphenyl)-propane and 1,1-bis-(4-hydroxyphenyl)-cyclohexane.

The most preferred bisphenol is 2,2-bis-(4-hydroxyphenyl)-propane (bisphenol A).

The polycarbonates of the invention may entail in their structure units derived from one or more of the suitable bisphenols.

Among the resins suitable in the practice of the invention are included phenolphthalein-based polycarbonate copolycarbonates and terpolycarbonates such as are described in U.S. Patents 3,036,036 and 4,210,741, both incorporated by reference herein.

The polycarbonates of the invention may also be branched by incorporating small quantities of polyhydroxyl compounds in them by condensation, e.g., 0.05—2.0 mol% (based on the quantity of bisphenols used). Polycarbonates of this type have been described, for example, in German Offenlegungsschften 1,570,533; 2,116,974 and 2,113,347; British Patents 885,442 and 1,079,821 and U.S. Patent 3,544,514. The following are some examples of polyhydroxyl compounds which may be used for this purpose: phloroglucinol; 4,6-dimethyl-2,4,6-tri-(4-hydroxyphenyl)-heptane-2; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)-cyclohexyl]-propane; 2,4-bis-(4-hydroxyphenyl-4-isopropyl)-phenol; 2,6-(2'-dihydroxy-5'-methylbenzyl)-4-methylphenol; 2,4-dihydroxybenzoic acid; 2-(4-hydroxyphenyl)-2-(2,4-dihydroxphenyl)-propane and 1,4-bis-(4',4"-dihydroxy-triphenylmethyl)-benzene. Some of the other polyfunctional compounds are 2,4-dihydroxybenzoic acid, trimesic acid, cyanuric chloride and 3,3-bis-(4-hydroxyphenyl)-2-oxo-2,3-dihydroindole.

In addition to the polycondensation process mentioned above and which essentials are described below, other processes for the preparation of the polycarbonates of the invention are polycondensation in a homogeneous phase and transesterification. The suitable processes are disclosed in the incorporated herein by reference U.S. Patents 3,028,365; 2,999,846; 3,248,414; 3,153,008; 3,215,668; 3,187,065; 2,064,974; 2,070,137; 2,991,273 and 2,000,835.

The preferred process is the interfacial polycondensation process.

According to the interfacial polycondensation process, copolycarbonate resins are obtained by reacting the aromatic dihydroxy compounds with an alkali metal hydroxide or alkaline earth metal oxide or hydroxide to form the salt of the hydroxy compounds. The salt mixture is present in an aqueous solution or suspension and is reacted with phosgene, carbonyl bromide or bischloroformic esters of the aromatic dihydroxy compounds. An organic solvent is provided in the reaction admixture which is a solvent for the polymer but not for the aromatic dihydroxy salts. Thus, chlorinated aliphatic hydrocarbons or chlorinated aromatic hydrocarbons are used as the organic solvent which dissolves the condensation product. In order to limit the molecular weight one may use monofunctional reactants such as monophenols, for example, the propyl-, isopropyl- and butylphenols, especially p-tert-butylphenol and phenol itself. In order to accelerate the reaction, catalysts such as tertiary amines, quaternary ammonium, phosphonium or arsonium salts and the like may be used. The reaction temperature should be about −20°C to +150°C, preferably 0° to about 100°C.

According to the polycondensation process in a homogeneous phase, the dissolved reaction components are polycondensed in an inert solvent in the presence of an equivalent amount of a tertiary amine base required for absorption of the generated HCl such as, e.g., N,N-dimethylaniline, N,N-dimethyl-cyclohexylamine or, preferably, pyridine and the like. In still another process, a diaryl carbonate can be transesterified with the aromatic dihydroxy compounds to form the polycarbonate resin.

It is to be understood that it is possible to combine in the processes described above in a chemically meaningful way, both the aromatic dihydroxy compounds and the monohydroxy compounds in the form of the alkali metal salts and/or bis-haloformic acid esters and the amount of phosgene or carbonyl bromide then still required in order to obtain high molecular products. Other methods of synthesis in forming the polycarbonates of the invention such as disclosed in U.S. Patent 3,912,688, incorporated herein by reference, may be used.

*3. The Graft Polymers*

The graft polymers suitable in the present context are characterized in that their structure comprises an elastomeric phase and a grafted phase. These copolymers are known in the art and include those wherein elastomeric phase having a glass transition temperature below about 0°C is polymerized from alkyl acrylate, butadiene or their respective copolymers, ethylene copolymers, polyisobutylene or polyisoprene. The elastomeric phase may optionally be at least partially crosslinked. The grafted phase comprises at least one monomer selected from acrylic esters of saturated aliphatic alcohols, methacrylic esters of saturated aliphatic alcohols, vinyl acetate, acrylonitrile, styrene and alkyl styrene.

Examples of the suitable grafts are ABS and multiphase composite interpolymers of the polyacrylate type. Specifically, ABS grafts, described for example in U.S. Patent, 3,238,275 which is incorporated herein by reference, consist of two or more polymeric parts of different compositions united. The graft copolymers may be prepared by polymerizing at least one conjugated diene, such as butadiene, or a

conjugated diene with a monomer polymerizable therewith, such as styrene, to provide a backbone, with subsequent polymerization of at least one grafting monomer, and preferably two, in the presence of the prepolymerized backbone to complete the graft polymer.

The backbone, as mentioned, is preferably a conjugated diene polymer or copolymer such as polybutadiene, butadiene-styrene, butadiene-acrylonitrile or the like.

A specific conjugated diene monomer which may be utilized in preparing the backbone of the graft polymer is generically described by the formula:

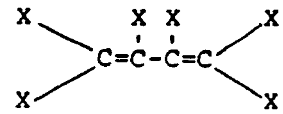

wherein X may be selected from the group consisting of hydrogen, alkyl groups containing from one to five carbon atoms, chloro and bromo. Examples of dienes that may be used are butadiene; isoprene; 1,2-heptadiene; methyl-1,3-pentadiene; 2,3-dimethyl-1,3-butadiene; 1,3-pentadiene; 2-methyl-3-ethyl-1,3-butadiene; 2-ethyl-1,3-pentadiene; 1,3- and 2,4-hexadienes, chloro- and bromo-substituted butadienes such as dichlorobutadiene, bromobutadiene, chloroprene, dibromobutadiene, mixtures thereof and the like. The preferred conjugated diene is butadiene.

The first monomer or group of monomers polymerized in the presence of the prepolymerized backbone are preferably monovinyl aromatic hydrocarbons. The monovinyl aromatic monomers utilized are generically described by the formula:

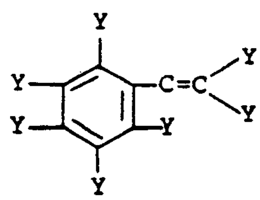

wherein Y may be selected from the group consisting of hydrogen, alkyl groups containing from one to five carbon atoms, chloro and bromo. Examples of the monovinyl aromatic compounds and substituted monovinyl aromatic compounds that may be used are styrene and other vinyl-substituted aromatic compounds including alkyl-, cycloalkyl-, aryl-, alkaryl-, aralkyl-, alkoxy-, aryloxy- and other substituted vinyl aromatic compounds. Examples of such compounds are 4-methyl-styrene; 3,5-diethyl-styrene and 4-n-propylstyrene, α-methylstyrene, α-methylvinyltoluene, α-chlorostyrene, vinyltoluene, α-bromostyrene, chlorophenylethylenes, dibromophenylethylenes, tetrachlorophenylethylenes, 1-vinylnaphthalene, 2-vinylnaphthalene, mixtures thereof and the like. The preferred monovinyl aromatic hydrocarbon is styrene and/or α-methylstyrene.

The second group of monomers that are polymerized in the presence of the prepolymerized backbone are acrylonitrile, substituted acrylonitrile and/or acrylic acid esters exemplified by acrylonitrile and alkyl acrylates such as methylmethacrylate. The acrylonitrile, substituted acrylonitrile or acrylic acid esters are described generically by the formula:

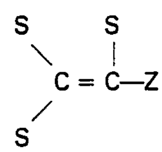

wherein S may be selected from the group consisting of hydrogen, alkyl groups containing from one to five carbon atoms, chloro and bromo and Z is selected from the group consisting of cyano and carbalkoxy wherein the alkyl group of the carbalkoxy group contains from one to about 12 carbon atoms. Examples of monomers of this description, i.e., acrylonitrile, substituted acrylonitrile or acrylic acid esters of the above formula are acrylonitrile, ethacrylonitrile, methacrylonitrile, α-chloroacrylonitrile, β-chloroacrylonitrile, α-bromoacrylonitrile and β-bromoacrylonitrile, methyl acrylate, methyl methacrylate, ethyl acrylate, butyl acrylate, propyl acrylate, isopropyl acrylate, isobutyl acrylate, mixtures thereof and the like. The preferred acrylic monomer is acrylonitrile and the preferred acrylic acid esters are ethyl acrylate and methyl methacrylate.

In the preparation of the graft polymer, the conjugated diolefin polymer or copolymer exemplified by 1,3-butadiene polymer or copolymer comprises from about 40% by weight to about 85% by weight of the total graft polymer composition and the monomers polymerized in the presence of the backbone,

exemplified by at least one of methyl methacrylate, ethyl acrylate, styrene and acrylonitrile comprise from about 60 to about 15% by weight of the total graft polymer composition.

The polyacrylate based elastomeric grafts suitable in the present context are exemplified by Acryloid® KM—330, a product of Rohm and Haas Company. Described as a multiphase composite interpolymer comprising a crosslinked acrylic first stage which also contains graft linking monomers, and a final rigid thermoplastic phase, this graft copolymer has been taught to improve the impact performance of thermoplastic polyester (U.S. 4,096,202) and of polycarbonate resins (U.S. 4,299,928), both incorporated herein by reference.

Briefly, the technology described therein is that of the preparation of a specific class of multiphase compounds. These are compositions comprising about 25 to 95 percent by weight of a first elastomeric phase and about 75 to 5 percent by weight of a second, rigid, thermoplastic phase. The first phase is polymerized from about 75 to 99.8 percent by weight $C_1$ to $C_6$ acrylate resulting in an acrylic rubber core having a glass transition temperature below about 10°C which is crosslinked with 0.1 to 5 percent by weight of a crosslinking monomer and to which is added 0.1 to 5 percent by weight of a graftlinking monomer.

The preferred alkyl acrylate is butyl acrylate. The crosslinking monomer is a polyethylenically unsaturated monomer having a plurality of addition polymerizable reactive groups all of which polymerize at substantially the same rate of reaction. Suitable crosslinking monomers include polyacrylic and polymethacrylic esters of polyols such as butylene diacrylate and dimethacrylate, trimethylol propane trimethacrylate and the like; di- and trivinyl benzene, vinyl acrylate and methacrylate, and the like. The preferred crosslinking monomer is butylene diacrylate. The graftlinking monomer is a polyethylenically unsaturated monomer having a plurality of addition polymerizable reaction groups, at least one of which polymerizing at a substantially different rate of polymerization from at least one other of said reactive groups. The function of the graftlinking monomer is to provide a residual level of unsaturation in the elastomeric phase, particularly in the latter stages of polymerization and consequently at or near the surface of the elastomer particles. The preferred graftlinking monomer is allyl methacrylate or diallyl maleate.

The final stage monomer system can be comprised of $C_1$ to $C_6$ methacrylate, styrene, acrylonitrile, alkyl acrylates, alkyl methacrylate, dialkyl methacrylate, and the like, as long as the over Tg is at least 20°C. Preferably, the final stage monomer system is at least 50 weight percent $C_1$ to $C_4$ alkyl methacrylate. The compositional makeup of the preferred acrylic rubber interpolymer composite is described by the weight ratios of its constituent monomers as follows: n-butyl acrylate/1.3 butylene diacrylate/diallyl maleate/ methyl methacrylate = 79.2/0.4/0.4/20.0.

Other polyacrylate-based grafts suitable in the practice of the invention are described in U.S. 4,022,748, incorporated herein by reference.

*4. The Modifying Oil*

In the present context, the modifier suitable in imparting improved impact properties to the compositions of the invention is any of the oils which are characterized in having their boiling temperature not lower than the processing temperature of the composition of the invention and further in that they are substantially chemically inert in respect to the components of said composition. Representative of these oils are mineral oils which are hydrocarbons derived from petroleum, i.e. any of paraffin oils or waxes.

Preferably suitable are naphthenes which are saturated hydrocarbons, specifically five and six carbon cycloparaffins and their alkyl derivatives found in crude oil.

A most preferred modifier is naphthenic oil, available as Sunthene® 4042 from Sun Oil Company.

In the practice of the invention, blends of 20—80 percent TPE, 3—60 percent polycarbonate and 3—40 percent of the graft copolymer — the percentages being in relation to the blend — are suitable. A preferred blend consists of 30 to 70 percent of TPE, 5 to 50 percent of polycarbonate and about 5 to 35 percent of graft copolymer. The compositions in accordance with the invention comprise said resinous blend to which added is about 1 to 7 percent, preferably 1.5 to 6 percent of the modifier, said percentages of modifier being in relation to the weight of the resinous blend.

In the practice, the blend is preferably first prepared by homogeneously mixing the dry compounds, extruding, pelletizing and molding in accordance with methods well known in the art. In cases where the modifier is in liquid form it is preferred to first blend the dry solid components and then to introduce the liquid component just prior to the extrusion.

The compositions of the present invention may contain the customary and known additives including antioxidants, thermal stabilizers and nucleating agents, as well as fillers, reinforcing agents, colorants, flame retardants and mold release agents and lubricants.

The example that follows is intended to demonstrate the invention in its preferred embodiment.

Example

Compositions in accordance with the invention were prepared and their properties determined as summarized in the table below. The specific components of the compositions were:

Thermoplastic Polyester (TPE): Poly(ethylene terephthalate) available from Goodyear as VFR 5041, characterized by its intrinsic viscosity of 1.04.

Polycarbonate — bisphenol A based resin: Merlon M—50 from Mobay Chemical Corporation (melt flow index per ASTM D—1238 about 3.0—5.9 gm/10 min.).

Graft copolymer — Acrylonitrile-butadiene-styrene containing about 80% butadiene rubber.

Modifier — Naphthenic oil available from Sun Oil Company as Sunthene 4042.

Additionally, the compositions contained minor amounts of additives known in the art to enhance nucleation, to impede oxidation, and to improve thermal stability, none of which is believed controlling of the present surprising and unexpected findings.

In preparing a composition in accordance with the present invention, the modifier in an amount of 3.11 percent by weight was added to a blend (control) consisting of 64.2% of TPE, 14.2% polycarbonate resin and 21.4% of graft copolymer (the percents are in relation to the weight of the control). The solid components were dried before blending and then extruded at 260°C to prepare the control composition. The composition in accordance with the invention was prepared by adding the modifier in liquid form to the dry blend prior to extrusion.

| Impact strength, ft-lb/in Notched Izod | Control | Control +3.11% modifier |
|---|---|---|
| at 23°C | 13.2 | 18.2 |
| at −10°C | 6.1 | 15.9 |

Although the invention has been described with reference to specific materials, the invention is only to be limited so far as is set forth in the accompanying claims.

**Claims**

1. A thermoplastic resin composition comprising a blend of
(i) a thermoplastic polyester having an Intrinsic viscosity of at least 0,4 dl/g,
(ii) an aromatic polycarbonate,
(iii) a graft copolymer and
a sufficient amount of a modifying oil to impart improved impact properties to said composition, wherein said blend consists of 20—80 percent of said (i), 3—60 percent of said (ii) and 3—40 percent of said (iii), said percents being in relation to the weight of said blend.

2. The composition of Claim 1 wherein said (iii) is butadiene based graft copolymer.

3. The composition of Claim 1 or 2 wherein said (iii) is a polyacrylate based graft copolymer.

4. The composition of Claim 1 wherein said modifying oil is a mineral oil.

5. The composition of Claim 1 wherein said modifying oil is naphthenic oil.

**Patentansprüche**

1. Thermoplastische Harz-Zusammensetzung aus einem Gemisch aus
(i) einem thermoplastischen Polyester mit einer Grenzviskosität von wenigstens 0,4 dl/g,
(ii) einem aromatischen Polycarbonat,
(iii) einem Pfropf-Copolymer und
einer hinreichenden Menge eines modifizierenden Öls, um der Zusammensetzung verbesserte Schlagzähigkeitseigenschaften zu verleihen, dadurch gekennzeichnet, daß das Gemisch zu 20 bis 80% aus (i), 3 bis 60% aus (ii) und 3 bis 40% aus (iii) besteht, wobei Prozent-Angaben sich auf das Gewicht des Gemischs beziehen.

2. Zusammensetzung nach Anspruch 1, dadurch gekennzeichnet, daß (iii) ein Pfropf-Copolymer auf Butadien-Basis ist.

3. Zusammensetzung nach Anspruch 1 oder 2, dadurch gekennzeichnet, daß (iii) ein Pfropf-Copolymer auf Polyacrylat-Basis ist.

4. Zusammensetzung nach Anspruch 1, dadurch gekennzeichnet, daß das modifizierende Öl ein Mineralöl ist.

5. Zusammensetzung nach Anspruch 1, dadurch gekennzeichnet, daß das modifizierende Öl ein naphthenisches Öl ist.

**Revendications**

1. Composition thermoplastique de résines comprenant un mélange
(i) d'un polyester thermoplastique ayant une viscosité intrinsèque d'au moins 0,4 dl/g,
(ii) d'un polycarbonate aromatique,
(iii) d'un copolymère greffé et

d'un quantité suffisante d'une huile modificatrice pour conférer de très bonnes propriétés de résistance au choc à ladite composition, ledit mélange comprenant 20—80% de (i), 3—60% de (ii) et 3—40% de (iii), lesdits pourcentages étant exprimés par rapport au poids dudit mélange.

2. Composition suivant la revendication 1, dans laquelle le composant (iii) est un copolymère greffé à base de butadiène.

3. Composition suivant la revendication 1 ou 2, dans laquelle le composant (iii) est un copolymère greffé à base de polyacrylate.

4. Composition suivant la revendication 1, dans laquelle l'huile modificatrice est une huile minérale.

5. Composition suivant la revendication 1, dans laquelle l'huile modificatrice est une huile naphténique.